Europäisches Patentamt

European Patent Office

Office européen des brevets

(11) Publication number: **0 089 156**
**B1**

# EUROPEAN PATENT SPECIFICATION

(45) Date of publication of patent specification: **29.06.88**

(51) Int. Cl.⁴: **G 05 B 19/407**

(21) Application number: **83301165.3**

(22) Date of filing: **04.03.83**

(54) **Method and apparatus for controlling acceleration and/or deceleration.**

(30) Priority: **08.03.82 JP 36184/82**

(43) Date of publication of application:
**21.09.83 Bulletin 83/38**

(45) Publication of the grant of the patent:
**29.06.88 Bulletin 88/26**

(84) Designated Contracting States:
**DE FR GB**

(56) References cited:
**EP-A-0 024 947**
**FR-A-2 198 301**
**FR-A-2 384 296**
**FR-A-2 419 800**
**US-A-3 344 260**
**US-A-3 727 191**

(73) Proprietor: **FANUC LTD**
**3580, Shibokusa Aza-Komanba Oshino-mura**
**Minamitsuru-gun Yamanashi 401-05 (JP)**

(72) Inventor: **Inaba, Hajimu**
**5-3-16, Asahigaoka Hino-shi**
**Tokyo (JP)**
Inventor: **Sakakibara, Shinsuke**
**Mezon-Izumi 101 1-23-3, Higashiizumi**
**Komae-shi Tokyo (JP)**

(74) Representative: **Billington, Lawrence Emlyn**
**et al**
**HASELTINE LAKE & CO Hazlitt House**
**28 Southampton Buildings Chancery Lane**
**London WC2A 1AT (GB)**

Courier Press, Leamington Spa, England.

## Description

This invention relates to a method and apparatus for controlling acceleration and/or deceleration. More particularly, but not exclusively, the invention relates to an accelerationdeceleration control method and apparatus well-suited for driving a movable element of a robot.

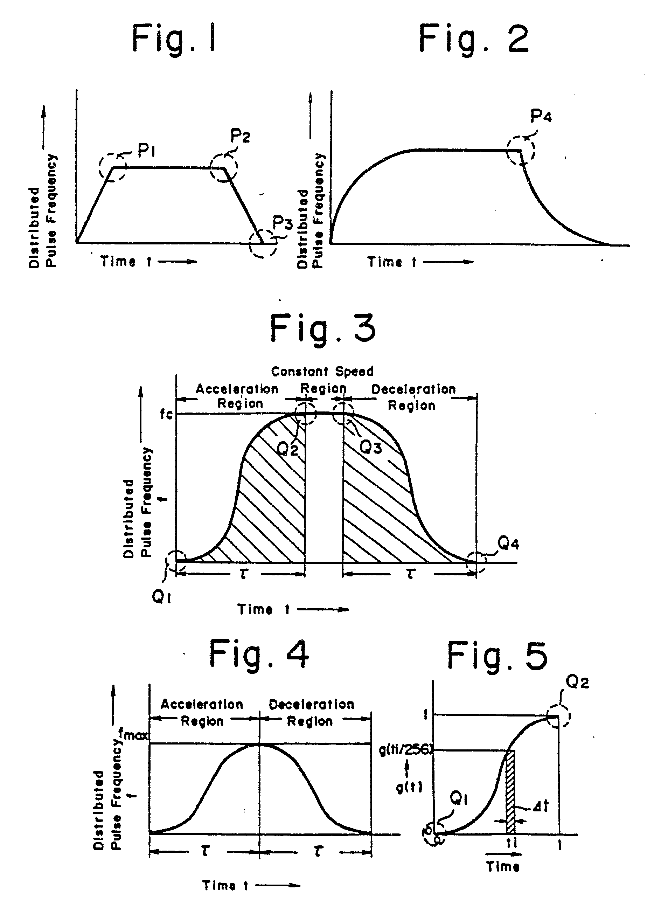

A numerical control device or robot control device may be adapted to control the table or tool of a machine tool or the movable element of a robot, such as a robot arm, to achieve positioning at desired points as well as movement along a desired path. The control device accomplishes this by performing an arithmetic pulse distribution operation based on a commanded amount of movement, thereby to produce so-called distributed pulses, and applying these pulses to a servo system to drive the servomotors of the machine tool or robot. In order to obtain good servomotor starting and stopping characteristics so that a servo-motor may be started and stopped smoothly, it is common practice to provide the train of distributed pulses with an acceleration/deceleration characteristic. Figs. 1 and 2 each show frequency characteristics wherein a train of distributed pulses is provided with an acceleration characteristic at the beginning of the pulse train and with a deceleration characteristic at the end of the pulse train. In Fig. 1 the acceleration/deceleration characteristic is linear, while in Fig. 2 the characteristic describes an exponential function.

The linear acceleration/deceleration characteristic is particularly effective for controlling a machine tool having a high degree of rigidity, wherein the movable element of the machine tool, such as a solid bed, reaches a constant speed in a short period of time. Owing to the abrupt change in the frequency of the distributed pulses at points P1, P2, P3, however, the movable element is likely to undergo vibration at these points. Such vibration poses problems particularly when driving a movable element having little rigidity, such as the arm of a robot. It has therefore been proposed to use the acceleration/deceleration characteristic having the exponential function shown in Fig. 2 in order to eliminate the aforementioned vibration. With the latter characteristic, however, more time is required for positioning and vibration will still occur at point P4.

French patent application FR—A—2 384 296 relates to apparatus for controlling the displacement of a movable element which moves on two axes X and Y, by controlling a driving motor. Amounts of displacement $\Delta X$ and $\Delta Y$ in unit time are calculated in accordance with a trigonometric function, and control pulses are generated which correspond to co-ordinates of the movable element. The apparatus is intended to accurately control the driving motor in order to ensure synchronism between commands and execution of movements.

French patent application FR—A—2 198 301 discloses a speed regulating circuit for a motor which can provide an exponential acceleration characteristic and a linear deceleration characteristic by generating command pulses of an appropriate frequency. The circuit allows regular rotation of the motor during starting and stopping by means of a correcting integration curve. The speed regulating circuit is intended to minimise the effects of mechanical inertia on motor operation and to easily regulate the duration of acceleration and deceleration periods. The disclosures of this document correspond to the prior art described above with reference to Figures 1 and 2.

United States patent application US—A—3 727 191 discloses means for automatic acceleration and deceleration in a numerical control system of the iteratively computing type, in which command pulses are not used. Velocity is controlled by iteratively calculating position increment values in successive time intervals in dependence upon a desired velocity. When the desired velocity is required to be changed, an acceleration or deceleration value is calculated which is added to the previous desired velocity at each time interval until the new desired velocity is reached. Linear or circular interpolation may be used for calculating the acceleration or deceleration values. The disclosed means is intended to allow automatic acceleration/deceleration in an iteratively computing numerical control system in a simple manner allowing accurate control of acceleration or deceleration values and deceleration to zero velocity without undue time stretch.

European patent application EP—0 024 947 discloses a feed speed control system for a movable member such as a workpiece table in a numerical control system. The feed speed control system allows manual adjustment of the feed speed to be easily effected, by means of memory circuitry storing a set of feed speed values one of which is selected by arithmetic circuitry in accordance with manual "up" and "down" commands.

The prior art exhibits disadvantages of the aforementioned kind and is not entirely satisfactory.

According to one aspect of the present invention, there is provided a control method wherein a train of control pulses are generated in accordance with a pulse frequency, wherein the control method is an acceleration and/or deceleration control method for controlling movement of a prime mover of a numerical control device by a commanded amount of movement by increasing and/or decreasing the frequency of the pulse train at the beginning and/or end of the pulse train, and characterised in that the method comprises the steps of:

(a) storing in advance, in a memory, a frequency function representing a velocity distribution giving an acceleration characteristic during an acceleration period and a deceleration characteristic during a deceleration period;

(b) determining a maximum frequency from a commanded frequency if the commanded amount of movement equals or exceeds a predetermined amount, or from the commanded amount of movement itself if it is less than the predetermined amount;

(c) reading said frequency function from said memory at times spaced apart by a predetermined interval;

(d) computing the frequency of said pulse train from the product of said maximum frequency and said frequency function at a current one of said times during said acceleration and/or deceleration; and

(e) generating pulses of a number corresponding to the product of the computed frequency and a predetermined time interval such that the differential coefficients of said frequency function at least at the starting and stopping of the drive of said prime mover are zero, whereby the prime mover is smoothly started from and/or stopped to a zero velocity.

According to another aspect of the present invention, there is provided a control apparatus for generating a train of control pulses in accordance with a pulse frequency, wherein,

the apparatus is an acceleration and/or deceleration control apparatus for controlling the drive of a prime mover of a numerical control device by increasing and/or decreasing the frequency of the pulse train at the beginning and/or end of the pulse train, characterised by:

(a) a memory for storing in advance a frequency function prevailing at each point in a time series and representing a velocity distribution giving an acceleration characteristic during an acceleration period and a deceleration characteristic during a deceleration period;

(b) a pulse generating circuit for generating pulses;

(c) a counter for counting up said pulses during said acceleration period, for holding the counted value of said pulses, which represents an address of said memory, constant during a constant velocity period, and for counting down the counted value of said pulses during said deceleration period each time one of said pulses is generated; and

(d) a read control circuit for reading said frequency function from said memory at the address represented by said counted pulse value,

the pulse generating circuit being adapted for generating pulses of a number corresponding to the product of said counted pulse value and a time interval such that the differential coefficients of said frequency function at least at the starting and stopping of the drive of said prime mover are zero, whereby the drive of said prime mover is smoothly started from and/or stopped to a zero velocity.

An embodiment of the present invention may provide a novel method and apparatus for controlling acceleration and deceleration, whereby a machine controlled by a numerical control device can be started and stopped smoothly in a short period of time.

An embodiment of the present invention may provide a novel method and apparatus for controlling acceleration and deceleration, whereby a movable machine element having little rigidity, such as a robot arm, can be started and stopped smoothly in a short period of time without vibration.

Other features and advantages of an embodiment of the present invention will be apparent from the following description taken in conjunction with the accompanying drawings, in which:

Fig. 1 shows a conventional acceleration/deceleration characteristic of linear type for a case where a train of distributed pulses is provided with an acceleration characteristic at the start of the pulse train and with a deceleration characteristic at the end of the pulse train;

Fig. 2 shows another conventional acceleration/deceleration characteristic, of exponential type, for a case where a train of distributed pulses is provided with an acceleration characteristic at the start of the pulse train and with a deceleration characteristic at the end of the pulse train;

Figs. 3, 4 and 5 show frequency characteristics of a train of distributed pulses and are useful in describing a method of controlling acceleration and deceleration according to the present invention; and

Fig. 6 is a block diagram of an embodiment of an acceleration/deceleration control apparatus according to the present invention.

According to an example of the present invention, an arrangement is adopted wherein both an acceleration characteristic and deceleration characteristic vary as either a sinusoidal function or cubic function, and wherein the frequency $f$ of a train of distributed pulses does not change abruptly at points $Q1$, $Q2$, $Q3$ and $Q4$ shown in Fig. 3. This is achieved by storing beforehand, in read-only memory (ROM) or like memory, a frequency function $g(t)$ indicative of either an acceleration or deceleration characteristic, reading the frequency function $g(t)$ out of the memory at a predetermined time interval $\Delta t$ to obtain the frequency $f(t_i)$ of the pulse train at the present time $t_i$, and generating pulses of a number corresponding to the product of $f(t_i)$ and $\Delta t$ for the length of time $\Delta t$.

Fig. 5 depicts the aforementioned frequency function $g(t)$, which is given by the following:

$$g(t) = \tfrac{1}{2} \sin \left[ \pi(t - \tfrac{1}{2}) \right] + \tfrac{1}{2} \qquad (1)$$

It should be noted that the frequency function $g(t)$ and time $t$ exhibit a maximum value of one when normalized. If we assume a time constant of, say, 256 milliseconds (which will have a value of one when normalized), then the prevailing value of $g(t_i/256)$ (where $i = 1, 2, ..., 32$) will be stored successively at the first to 32nd addresses of a ROM every 8 milliseconds. Thus, starting from a reference time, the value of the frequency function prevailing at time ($t_1 = 8$ milliseconds) will be stored at the first address, the value prevailing at time $t_2$ ($= 16$ milliseconds) will be stored at the second address, the value prevailing at time $t_{31}$ ($= 248$ milliseconds) will be stored in the 31st address, and the value prevailing at $t_{32}$ (=256 milliseconds) will be stored at the 32nd address. If we let $f_c$ be the commanded frequency, then the frequency $f(t_i)$ of the distributed pulse train will be the product of $f_c$ and $g(t_i/256)$. Accordingly, as will be apparent from Fig. 5 and from Eq. (1), the differential coefficients $g'(0)$, $g'(1)$ at points Q1, Q2 both becomes zero, meaning that the frequency $f(t_i)$ of the distributed pulse train will not change abruptly at these points.

According to a feature of the present example of the invention, acceleration and deceleration are controlled in accordance with the frequency characteristic of Fig. 3 when the following relation holds:

$$L \geq f_c \cdot \tau \qquad (2)$$

(where $f_c$ represents the commanded frequency, L represents a commanded amount of movement, and $\tau$ represents the time constant), and in accordance with the frequency characteristic of Fig. 4 when the following relation holds:

$$L < f_c \cdot \tau \qquad (3)$$

(where $f_c$, L and $\tau$ are as defined above). Note that $f_c \cdot \tau$ is the sum of the acceleration distance and deceleration distance, shown by the shaded portion of the Fig. 3. Further, according to the present example of the invention, maximum frequency $f_{max}$ shown in Fig. 4 is decided so as to satisfy the relation:

$$L = f_{max} \cdot \tau \qquad $$

In other words, $f_{max}$ is computed from:

$$f_{max} = L/\tau \qquad (4)$$

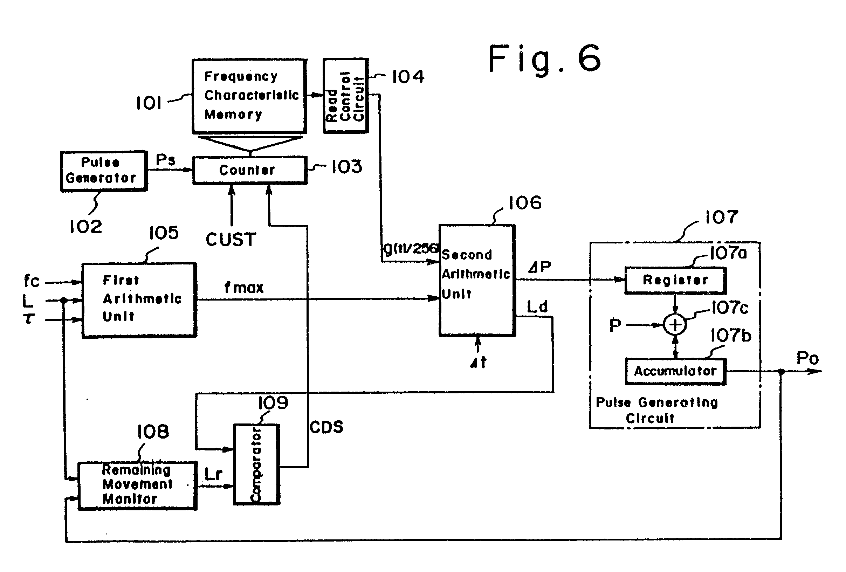

Reference will now be had to Fig. 6 showing a block diagram of an apparatus for practicing a method of the present invention. The apparatus includes a memory 101 for storing frequency characteristics. If the time constant is 256 milliseconds as described above, then the memory 101 will be capable of storing the value of the frequency function $g(t_i/256)$ i=1, 2, ..., 32) prevailing at each of 32 points in a time series $t_1$, $t_2$, ..., $t_{32}$, which points occur every 8 milliseconds. Further included is a pulse generator 102 for generating pulses Ps having a period of 8 milliseconds. The pulses Ps enter a counter 103 the status whereof is incremented by the pulses Ps during acceleration (left side of Figs. 3 and 4), the counted value being maintained constant when the speed is constant (central portion of Fig. 3), and the status of the counter is decremented by the pulses Ps during deceleration (right side of Figs. 3 and 4). The value of the count prevailing within the counter 103 designates an address in memory 101, from which address the value of the frequency function $g(t)$ will be read. This is performed by a read control circuit 104 which is adapted to read $g(t_i/256)$ out of the memory 101 at

a regulator interval $\Delta t$, i.e., every 8 milliseconds in the illustrated embodiment. A first arithmetic unit 105, the inputs to which are signals indicative of the commanded frequency $f_c$, commanded amount of movement L and time constant $\tau$, is operable to compare the magnitudes of L and the product $f_c \cdot \tau$, and to produce an output signal indicative of $f_c$, which will serve as the maximum frequency $f_{max}$, when the relation $L \geq f_c \cdot \tau$ is found to hold, and indicative of $L/\tau$ [expressed by Eq. (4)] which will serve as $f_{max}$ when the relation $L \leq f_c \cdot \tau$ is found to hold. The signal indicative of $f_{max}$ is applied to a second arithmetic unit 106 for performing the following arithmetic operations:

$$\Delta p = f_{max} g(t_i/256) \Delta t \qquad (5)$$

$$Ld = f_{max} \cdot \tau/2 \qquad (6)$$

In Eq. (5), the product $f_{max} g(t_i/256)$ is the frequency $f(t_i)$ at the present time $t_i$. Therefore, $\Delta p$ represents the number of pulses generated during the interval $\Delta t$, which is equal to 8 milliseconds in this embodiment. In Eq. (6), Ld represents the amount of movement which remains for starting deceleration. The second arithmetic unit 106 applies a signal indicative of $\Delta p$ to a pulse generating circuit 107 having the well-known construction of a digital differential analyzer (DDA). Specifically, the pulse generating circuit 107 comprises a register 107a in which the value $\Delta p$ is set, an accumulator 107b, and an adder 107. The latter adds the contents of register 107a and the contents of the accumulator 107b together each time a pulse P is generated, these pulses being generated at a constant frequency Fo, and stores the resulting sum in the accumulator 107b. Owing to the input from the adder 107c, the accumulator 107b produces overflow pulses as the output pulses Po of the pulse generating circuit 107. If the accumulator 107b has an n-bit construction, then the pulse rate $f_o$ of the output pulses Po will be expressed by:

$$f_o = \Delta p \cdot Fo/2^n \qquad (7)$$

Therefore, letting the frequency of the pulses P be given by:

$$Fo = 125 \cdot 2^n \text{ (pulse/sec)} \qquad (8)$$

the following will hold:

$$f_o = 125 \cdot \Delta p \text{ (pulse/sec)} \qquad (7')$$

and $f_o \cdot 8/1000$ pulses, namely $\Delta p$-number of output pulses Po, will be generated during $\Delta t$ (=8 milliseconds).

The apparatus also includes a unit 108 for monitoring the remaining amount of movement. The monitoring unit 108 receives the commanded amount of movement L as one input thereto and is set to this value, and receives the output pulses Po from the pulse generating circuit 107 as the other input thereto, the set value L being decremented by one count each time one of the pulses Po is generated. The value remaining in the monitoring unit 108 represents the remaining amount of movement (namely the distance remaining to be traveled by the movable element), a signal Lr indicative of this value being delivered to a comparator circuit 109. The latter compares the magnitude of Lr with the magnitude of the remaining amount of movement Ld for starting deceleration, received from the second arithmetic unit 106, and produces a count-down start signal CDS, connected to the counter 103, when Ld and Lr are found to be equal. Also applied to the counter 103 is a count-up stop signal CUST which, following the start of acceleration, is generated upon passage of a time period corresponding to the time constant $\tau$. The signal CUST terminates the counting operation performed by the counter 103.

In the operation of the apparatus shown in Fig. 6, the commanded amount of movement L and the commanded frequency $f_c$ are read in from a numerical control tape. The signals indicative of L and $f_c$ enter the first arithmetic unit 105, and L is also applied to the monitoring unit 108 and set therein. At the same time, the counter 103 begins counting up the pulses Ps having the period $\Delta t$ (=8 milliseconds). The first arithmetic unit 105 compares L and the product $f_c \cdot \tau$ in magnitude and produces $f_c$ as the maximum frequency $f_{max}$ when $L \geq f_c \cdot \tau$ holds, or $L/\tau$ as the maximum freuency $f_{max}$ when $L < f_c \cdot \tau$ hols. In concurrence with the foregoing, counter 103 counts up the pulses Ps and, when the counter is incremented to a numerical value of 1, the read control circuit 104 reads the normalized frequency function $g(t_1/256)$ out of the first address of the frequency storage memory 101 at time $t_1$ (where $t_1 = 8$). The value read out of the memory 101 is applied to the second arithmetic unit 106. The latter performs the arithmetic operations of Eqs. (5) and (6) to supply the pulse generating circuit 107 with the number of pulses $\Delta p$ generated during the time $\Delta t$ and to provide the comparator 109 with the remaining amount of movement Ld for starting deceleration. The pulse generating circuit 107 performs the DDA pulse generating operation described above to generate the $\Delta p$-number of output pulses Po during the time $\Delta t$. Each pulse Po is applied to the monitoring unit 108 as the pulse is generated, whereby the content of the monitoring unit is decremented by one count as each pulse Po arrives. The comparator circuit 109 is operable to compare Lr and Ld in magnitude at all times.

The pulse generating circuit 107 generates $\Delta p$-number of output pulses Po before the passage of time $\Delta t$ (=8 milliseconds). When the second pulse Ps is generated by the pulse generator 102, the content of counter 103 is incremented to a value of 2 and the value of the frequency function $g(t_2/256)$ (where $t_2 = 16$) is read out of the second address of the memory 101. This value is applied to the second arithmetic unit 106. This is followed by the series of operations described above. The foregoing processing is repeated at each of the points in the time series t3, t4, ..., t32 spaced apart by Tt (=8 milliseconds).

The frequency (pulse rate) of the output pulses Po is accelerated in accordance with the acceleration characteristic of Fig. 3 in a case where $L \geq f_c \cdot \tau$ holds, and in accordance with the acceleration characteristic of Fig. 4 in a case where $L < f_c \cdot \tau$ holds, with $f_c$ or $f_{max}$ being attained upon passage of the time constant $\tau$. The count-up stop signal CUST is generated after the elapse of the time constant $\tau$. If the relation $L \geq f_c \cdot \tau$ holds at this time, the content of the counter 103 will be maintained at a value of 32 so that the input to the second arithmetic unit 106 will stay at $g(1)$ (=1) from then on. When a length of time equivalent to the time constant $\tau$ elapses in a case where $L < f_c \cdot \tau$ holds, the relation Lr=Ld will hold. The comparator circuit 109 will therefore produce the count-down start signal CDS to start deceleration processing from that point in time onward.

When the relation $L \geq f_c \cdot \tau$ holds, the second arithmetic unit 106 performs the operation:

$$\Delta p = f_{max} \cdot g(1) \cdot \Delta t$$
$$= f_c \cdot \Delta t$$

every 8 milliseconds ($\Delta t$), and supplies the pulse generating circuit 107 with the number of pulses $\Delta p$ generated during the time period $\Delta t$. The pulse generating circuit 107 generates $\Delta p$-number of output pulses Po during the time period $\Delta t$ and holds the frequency at a constant value. The output pulses Po enter the monitoring unit 108 which responds by counting down the remaining amount of movement Lr one step at a time. As the foreging processing is repeated in like fashion, Lr=Ld will be established at a certain point in time and the comparator circuit 109 will generate the count-down start signal CDS. The counter 103 responds to this signal by allowing its content to be counted down by one step every time a pulse Ps is generated. The read control circuit 104 consequently reads g(248/256), g(240/256), ..., g(16/256), g(8/256) out of the memory 101 in successive fashion every 8 milliseconds ($\Delta t$), whereby the number of pulses $\Delta p$ generated during the length of time $\Delta t$ are diminished in accordance with the curve indicating the deceleration characteristic of Fig. 3. In other words, the frequency is reduced in accordance with the deceleration characteristic shown in Fig. 3.

If the output pulses Po obtained through the above-described processing are applied to the pulse distribution circuit of a numerical control device or robot control device and a pulse distribution operation is executed each time an output pulse Po is produced, then the pulse train provided by the pulse distribution circuit will have the acceleration/deceleration characteristic depicted in Fig. 3 or in Fig. 4.

It will be understood from the foregoing description that the change in output frequency is not abrupt. This will enable even a movable element having little rigidity to be started and stopped smoothly and in a short period of time.

As many apparently widely different embodiments of the present invention can be made without departing from the spirit and scope thereof, it is to be understood that the invention is not limited to the specific embodiments thereof except as defined in the appended claims.

Claims

1. A control method wherein a train of control pulses are generated in accordance with a pulse frequency, wherein

the control method is an acceleration and/or deceleration control method for controlling movement of a prime mover of a numerical control device by a commanded amount of movement (L) by increasing and/or decreasing (the frequency of the pulse train at the beginning and/or end of the pulse train, and characterised in that the method comprises the steps of:

(a) storing in advance, in a memory, a frequency function ($g(t)$) representing a velocity distribution giving an acceleration characteristic during an acceleration period and a deceleration characteristic during a deceleration period;

(b) determining a maximum frequency ($f$ max) from a commanded frequency ($fc$) if the commanded amount of movement (L) equals or exceeds a predetermined amount ($fc\tau$), or from the commanded amount of movement (L) itself if it is less than the predetermined amount ($fc\tau$);

(c) reading said frequency function ($g(t)$) from said memory at times ($ti$) spaced apart by a predetermined interval;

(d) computing the frequency ($f(ti)$) of said pulse train from the product of said maximum frequency, ($f$ max) and said frequency function at a current one of said times ($ti$) during said acceleration and/or deceleration; and

(e) generating pulses of a number ($\Delta P$) corresponding to the product of the computed frequency ($f(ti)$) and a predetermined time interval ($\Delta t$) such that the differential coefficients of said frequency function ($g(t)$) at least at the starting and stopping of the drive of said prime mover are zero, whereby the prime mover is smoothly started from and/or stopped to a zero velocity.

2. The method according to claim 1, wherein said step (e) is conducted such that the differential coefficients of said frequency function ($g(t)$) are also zero at transitions of the drive of said prime mover from said acceleration to a constant velocity and from a constant velocity to said deceleration.

3. The method according to claim 1 or 2, wherein said frequency function ($g(t)$) is represented by a cubic function.

4. The method according to claim 1 or 2, wherein said frequency function ($g(t)$) is represented by a sinusoidal function.

5. A control apparatus for generating a train of control pulses in accordance with a pulse frequency, wherein,

the apparatus is an acceleration and/or deceleration control apparatus for controlling the drive of a primer mover of a numerical control device by increasing and/or decreasing the frequency of the pulse train (Po) at the beginning and/or end of the pulse train; characterised by:

(a) a memory (101) for storing in advance a frequency function $g(t)$ prevailing at each point in a time series and representing a velocity distribution giving an acceleration characteristic during an acceleration period and a deceleration characteristic during a deceleration period;

(b) a pulse generating circuit (107) for generating pulses;

(c) a counter (103) for counting up said pulses during said acceleration period, for holding the counted value of said pulses, which represents an address of said memory, constant during a constant velocity period, and for counting down the counted value of said pulses during said deceleration period each time one of said pulses is generated; and

(d) a read control circuit (104) for reading said frequency function $g(t)$ from said memory (101) at the address represented by said counted pulse value,

the pulse generating circuit (107) being adapted for generating pulses of a number corresponding to the product of said counted pulse value and a time interval such that the differential coefficients of said frequency function $g(t)$ at least at the starting and stopping of the drive of said prime mover are zero, whereby the drive of said prime mover is smoothly started from and/or stopped to a zero velocity.

6. The apparatus according to claim 5, further comprising:

a first arithmetic unit (105) made responsive to a command frequency $f_c$, a commanded amount of movement L and a time constant $\tau$ for comparing the magnitudes of said commanded amount of movement L and the product ($f_c \cdot \tau$) of said commanded frequency $f_c$ and said time constant $\tau$ to produce said commanded frequency $f_c$ as an output indicative of the maximum frequency $f_{max}$ when said commanded amount of movement L is equal to or greater than said product $f_c \cdot \tau$, i.e. for $L \geq f_c \cdot \tau$, and a ratio $L/\tau$ as an output indicative of said maximum frequency $f_{max}$ when said commanded amount of movement L is smaller than said product $f_c \cdot \tau$, i.e. for $L < f_c \cdot \tau$; and

a second arithmetic unit (106) for computing a number of said pulses $\Delta P$ generated for a predetermined time interval $\Delta t$ corresponding to the product of a frequency $f(t_i)$ (e.g. i=a natural number) prevailing at a present time during said acceleration period and/or said deceleration period and said time interval $\Delta t$, where $f(t_i)=f_{max} \cdot g(t_i/$ (the time constant of said memory)), and for computing an amount of movement Ld for starting said deceleration where $Ld=f_{max} \cdot \tau/2$, and

wherein said pulse generating circuit (107) includes a digital differential analyzer (107a, 107b, 107c) made responsive to said pulses $\Delta P$ as its input for generating output pulses Po.

7. The apparatus according to claim 6, further comprising:

a remaining amount of movement monitoring unit (108) operable to be set with said commanded amount of movement L for counting down the value of said commanded amount of movement L by one step, each time one of said output pulses Po is generated by said pulse generating circuit (107), to produce a remaining amount of movement Lr; and

a comparator (109) for comparing the magnitudes of a deceleration starting amount of movement Ld and said remaining amount of movement Lr to deliver a signal to said counter when Ld=Lr for causing said counter to count down said counted value.

8. The apparatus according to claim 6 or 7, wherein said pulse generating circuit (107) includes:

a register (107a) for storing said number of pulses ΔP;

an accumulator (107b) for delivering overflow pulses as said output pulses Po; and

an adder (107c) for adding the contents of said register (107a) and the contents of said accumulator (107b) each time a pulse P is generated for a constant period Fo, and for storing the added value in said accumulator (107b).

**Patentansprüche**

1. Steuerverfahren, wobei ein Zug Steuerimpulse entsprechend einer Impulsfrequenz erzeugt wird, wobei

das Steuerverfahren ein Beschleunigungs- und/oder Verzögerungssteuerverfahren zum Steuern der Bewegung einer Antriebsmaschine einer numerischen Steuereinrichtung durch einen befohlenen Betrag der Bewegung (L) durch Erhöhung und/oder Erniedrigung der Frequenz des Impulszuges am Beginn und/oder Ende des Impulszuges ist, dadurch gekennzeichnet, daß das Verfahren die Schritte

(a) des Imvorausspeicherns einer Frequenzfunktion (g(t)) in einem Speicher, die eine Geschwindigkeitsverteilung repräsentiert, welche während einer Beschleunigungsperiod eine Beschleunigungscharakteristik und während einer Verzögerungsperiode eine Verzögerungscharakteristik gibt,

(b) des Bestimmens einer Maximalfrequenz (fmax) aus einer befohlenen Frequenz (fc), wenn der befohlene Betrag der Bewegung (L) gleich einem vorbestimmten Betrag (fcτ) ist oder diesen überschreitet, oder aus dem befohlenen Betrag der Bewegung (L) selbst, wenn er kleiner als der vorbestimmte Betrag (fcτ) ist,

(c) des Lesens der Frequenzfunktion (g(t)) aus dem Speicher zu Zeitpunkten (ti), die um ein vorbestimmtes Intervall voneinander getrennt sind,

(d) des Berechnens der Frequenz (f(ti)) des Impulszuges aus dem Produkt aus der Maximalfrequenz (f max) und der Frequenzfunktion bei einem laufenden der Zeitpunkte (ti) während der Beschleunigung und/oder Verzögerung und

(e) der Erzeugung einer Zahl von Impulsen (ΔP), welche dem Produkt aus der berechneten Frequenz (f(ti)) und einem vorbestimmten Zeitintervall (Δt) derart entspricht, daß die Differentialkoeffizienten der Frequenzfunktion (g(t)) wenigstens beim Starten und Anhalten des Antriebs der Antriebsmaschine Null sind, wodurch die Antriebsmaschine weich aus einer Nullgeschwindigkeit gestartet und/oder weich in Nullgeschwindigkeit angehalten wird, aufweist.

2. Verfahren nach Anspruch 1, wobei der Schritt (e) so ausgeführt wird, daß die Differentialkoeffizienten der Frequenzfunktion (g(t)) auch bei Übergängen des Antriebs der Antriebsmaschine von der Beschleunigung in eine konstante Geschwindigkeit und von einer konstanten Geschwindigkeit in eine Verzögerung Null sind.

3. Verfahren nach Anspruch 1 oder 2, wobei die Frequenzfunction (g(t)) durch eine kubische Funktion repräsentiert ist.

4. Verfahren nach Anspruch 1 oder 2, wobei die Frequenzfunction (g(t)) durch eine sinusförmige Funktion repräsentiert ist.

5. Steuervorrichtung zum Erzeugen eines Zuges Steuerimpulse entsprechend einer Impulsfrequenz, wobei die Vorrichtung eine Beschleunigungs- und/oder Verzögerungssteuervorrichtung zum Steuern des Antriebs einer Antriebsmaschine einer numerischen Steuereinrichtung durch Erhöhen und/oder Erniedrigen der Frequenz des Impulszuges (Po) am Beginn und/oder Ende des Impulszuges ist, gekennzeichnet durch

(a) einen Speicher (101) zum Imvorausspeichern einer maßgebenden Frequenzfunktion g(t), die in jedem Punkt einer Zeitreihe maßgebend ist und eine Geschwindigkeitsverteilung repräsentiert, welche während einer Beschleunigungsperiode eine Beschleunigungscharakteristik und während einer Verzögerungsperiode eine Verzögerungscharakteristik gibt,

(b) einen Impulserzeugungsschaltkris (107) zum Erzeugen von Erzeugungsimpulsen,

(c) einen Zähler (103) zum Hochzählen der Impulse während der Beschleunigungsperiode zum Halten des gezählten Wertes der Impulse, welcher eine während einer Konstantgeschwindigkeitsperiode konstante Adresse des Speichers repräsentiert und zum Herabzählen des gesählten Wertes der Impulse während der Verzögerungsperiode jedesmal, wenn einer der Impulse erzeugt wird, und

(d) einen Lesesteuerschaltkreis (104) zum Auslesen der Frequenzfunktion g(t) aus dem Speicher (101) bei der durch den gezählten Impulswert repräsentierten Adresse,

wobei der Impulserzeugungsschaltkreis (107) zur Erzeugung einer Zahl von Impulsen ausgebildet ist, die dem Produkt aus dem gesählten Impulswert und einem Zeitintervall derart entspricht, daß die Differentialkoeffizienten der Frequenzfunktion g(t) wenigstens beim Starten und Anhalten des Antriebs der Antriebsmaschine Null sind, wodurch der Antrieb der Antriebsmaschine weich aus einer Nullgeschwindigkeit gestartet und/oder weich in einer Nullgeschwindigkeit angehalten wird.

6. Vorrichtung nach Anspruch 5, mit einer ersten arithmetischen Einheit (105), die auf eine befohlene Frequenz $f_c$ einen befohlenen Betrag der Bewegung der Bewegung L und eine Zeitkonstante τ anspricht, zum Vergleichen der Größen des befohlenen Betrags der Bewegung L und des Produkts $(f_c \cdot \tau)$ aus der befohlenen Frequenz $f_c$ und der Zeitkonstante τ um die befohlene Frequenz $f_c$ als eine Ausgabe, welche die Maximalfrequenz $f_{max}$ anzeigt, wenn der befohlene Betrag der Bewegung L gleich oder größer ist als das Produkt $f_c \cdot \tau$, d.h. für $L \geq f_c \cdot \tau$, und ein verhältnis L/τ als eine Ausgabe zu erzeugen, welche die Maximalfrequenz $f_{max}$ anzeigt, wenn der befohlene Betrag der Bewegung L kleiner als das Produkt $f_c \cdot \tau$ ist, d.h. für $L < f_c \cdot \tau$ und mit einer zweiten arithmetischen Einheit (106) zum Berechnen einer Zahl ΔP der Impulse, die für ein vorbestimmtes Zeitintervall Δt erzeugt werden, welches dem Produkt aus einer Frequenz $f(t_i)$ (beispielsweise ist i eine natürliche Zahl), die zum gegenwärtigen Zeitpunkt während der Beschleunigungsperiode und/oder der Verzögerungsperiode vorgegeben ist, und dem Zeitinterval Δt entspricht, wobei $f(t_i) = f_{max} \cdot g(t_i/$ (die Zeitkonstante des Speichers)) gilt, und zum Berechnen eines Betrags einer Bewegung (Ld) zum Starten der Verzögerung, wobei $Ld = f_{max} \cdot \tau/2$ gilt und wobei der Impulserzeugungsschaltkreis (107) einen digitalen Differentialanalysator (107a, 107b, 107c) aufweist, der auf die Impulse ΔP als seine Eingabe zur Erzeugung von Ausgangsimpulsen Po anspricht.

7. Vorrichtung nach Anspruch 6, mit einer Überwachungseinheit (108) für einen verbleibenden Betrag einer Bewegung, die so betreibbar ist, daß sie mit dem befohlenen Betrag der Bewegung L zum Herabzählen des Wertes des befohlenen Betrags der Bewegung L um einen Schritt jedesmal einstellbar ist, wenn einer der Ausgangsimpulse Po durch den Impulserzeugungsschaltkreis (107) erzeugt wird, um einen verbleibenden Betrag einer Bewegung Lr zu erzeugen; und mit einem Komparator (109) zum Vergleichen der Größen einer Verzögerungsstartbetrages der Bewegung Ld und des verbleibenden Betrags der Bewegung Lr zur Ausgabe eines Signals an den Zähler wenn Ld=Lr, um zu bewirken, daß der Zähler den gezählten Wert herabzählt.

8. Vorrichtung nach Anspruch 6 oder 7, wobei der Impulserzeugungsschaltkreis (107) ein Register (107a) zum Speichern der Zahl Impulse ΔP, einen Akkumumator (107b) zum Ausgeben von Überlaufimpulsen als die Ausgangsimpulse Po und einen Addierer (107c) zum Addieren der Inhalte des Registers (107a) und der Inhalte des Akkumulators (107b) jedesmal, wenn für eine konstante Periode Fo ein Impuls P erzeugt wird, und zum Speichern des addierten Wertes in dem Akkumulator (107b) aufweist.

## Revendications

1. Un procédé de commande dans lequel un train d'impulsions de commande est formé avec une certaine fréquence d'impulsions, dans lequel:

le procédé de commande est un procédé de commande d'accélération et/ou de décélération pour commander le mouvement d'un moteur principal d'un dispositif à commande numérique selon une amplitude commandée du mouvement (L) en augmentant et/ou en diminuant la fréquence du train d'impulsions au début et/ou à la fin du train d'impulsions, et caractérisé en ce que le procédé comprend les opérations de:

(a) stockage d'avance, dans une mémoire, d'une fonction fréquence (g (t)) représentant une répartition de vitesse qui conduit à une caractéristique d'accélération pendant une période d'accélération et à une caractéristique de décélération pendant une période de décélération;

(b) détermination d'une fréquence maximale (f max) à partir d'une fréquence commandée (fc) si l'amplitude commandée du mouvement (L) est égale ou supérieure à une quantité prédéterminée (fcτ), ou à partir de l'amplitude commandée du mouvement (L) elle-même si elle est inférieure à l'amplitude prédéterminée (fcτ);

(c) lecture de ladite fonction fréquence (g t)) dans ladite mémoire à des temps (ti) espacés d'un intervalle prédéterminée;

(d) calcul de la fréquence (f ti)) dudit train d'impulsions à partir du produit de ladite fréquence maximale (f max) et de ladite fonction fréquence à un temps actuel parmi lesdits temps (ti) au cours de ladite accélération et/ou décélération; et

(e) génération d'impulsions en un nombre (ΔP) qui correspond au produit de la fréquence calculée (f (ti)) et d'un intervalle de temps prédéterminée (Δt) tel que les coefficients différentiels de ladite fonction fréquence (g (t)) au moins au départ et à l'arrêt de l'entraînement dudit moteur principal sont de zéro, de sorte que le moteur principal est démarré doucement à partir d'une vitesse zéro et/ou arrêté jusqu'à une vitesse zéro.

2. Le procédé selon la revendication 1, dans lequel ladite opération(e) est conduite de telle façon que les coefficients différentiels de ladite fonction fréquence (g (t)) soient aussi égaux à zéro aux transitions du mouvement dudit moteur principal entre ladite accélération et une vitesse constante et entre une vitesse constante et ladite décélération.

3. Le procédé selon la revendication 1 ou 2, dans lequel ladite fonction fréquence (g t)) est représentée par une fonction cubique.

4. Le procédé selon la revendication 1 ou 2, dans lequel ladite fonction fréquence (g t)) est représentée par une fonction sinusoïdale.

5. Un dispositif de commande pour former un train d'impulsions de commande en fonction d'une fréquence d'impulsions,

dans lequel, le dispositif est un dispositif de commande d'accélération et/ou de décélération pour commander l'entraînement d'un moteur principal d'un dispositif de commande numérique en augmentant et/ou en diminuant la fréquence de train des impulsions (Po) au début et/ou à la fin du train d'impulsions; caractérisé par:

(a) une mémoire (101) pour stocker d'avance une fonction fréquence (g t)) existant en chaque point d'une série dans le temps et représentant une répartition de vitesse conduisant à une caractéristique d'accélération pendant une période d'accélération et à une caractéristique de décélération pendant une période de décélération;

(b) un circuit générateur d'impulsions (107) pour générer des impulsions;

(c) un compteur (103) pour compter lesdites impulsions en montant pendant ladite période d'accélération, afin de maintenir la valeur comptée desdites impulsions, qui représente une adresse de ladite mémoire, à une valeur constante pendant une période à vitesse constante, et pour décompter la valeur comptée desdites impulsions pendant ladite période de décélération à chaque fois que l'une desdites impulsions est formée; et

(d) un circuit de commande de lecture (104) pour la lecture de ladite fonction fréquence (g t)) dans ladite mémoire (101) à l'adresse représentée par ladite valeur comptée des impulsions,

le circuit générateur d'impulsions (107) étant adapté pour former des impulsions en un nombre qui correspond au produit de ladite valeur comptée des impulsions et d'un intervalle de temps tel que les coefficients différentiels de ladite fonction fréquence (g t)) au moins au départ et à l'arrêt du mouvement dudit moteur principal soient égaux à zéro, de sorte que ledit moteur principal soit démarré et arrêté progressivement à partir de et jusqu'à une vitesse de zéro.

6. Dispositif selon la revendication 5 comprenant en outre:

une première unité arithmétique (105) réalisée pour répondre à une fréquence commandée $f_c$, une amplitude commandée de mouvement (L) et une constant de temps τ afin de comparer les valeurs de ladite amplitude commandée de mouvement (L) et le produit $(f_c \cdot τ)$ de ladite fréquence commandée $f_c$ et de ladite constante de temps τ pour produire ladite fréquence commandée $(f_c)$ en tant que sortie indicative de la fréquence maximale $f_{max}$ lorsque ladite amplitude commandée de mouvement L est égale ou supérieure audit produit $f_c \cdot τ$, c'est-à-dire pour $L \geq f_c \cdot τ$, et un rapport L/τ en tant que sortie indicative de ladite

fréquence maximale $f_{max}$ lorsque ladite amplitude commandée de mouvement L est inférieure audit produit $f_c \cdot τ$, c'est-à-dire pour $L < f_c \cdot τ$; et

une second unité arithmétique (106) pour calculer un nombre desdites impulsions ΔP générées pendant un intervalle de temps prédéterminé Δt correspondant au produit d'une fréquence $f(t_i)$ (par exemple i=un nombre entier) se trouvant à un temps actuel pendant ladite période d'accélération et/ou ladite période de décélération et ledit intervalle de temps Δt, où $f(t_i)=f_{max} \cdot g(t/$ (la constante de temps de ladite mémoire)), et permettant de calculer une amplitude de mouvement Ld pour démarrer ladite décélération lorsque $Ld=f_{max} \cdot τ/2$, et

dans lequel ledit circuit générateur d'impulsions (107) comprend un analyseur différentiel numérique (107a, 107b, 107c) réalisé pour répondre auxdites impulsions ΔP à son entrée pour former des impulsions de sortie Po.

7. Dispositif selon la revendication 6, comprenant en outre:

une unité de surveillance de l'amplitude du mouvement restant (108) ayant pour fonction d'être positionnée sur ladite valeur commandée du mouvement (L) afin de décompter la valeur de ladite amplitude commandée du mouvement (L) d'un pas, à chaque fois que l'une desdites impulsions de sortie (Po) est générée par ledit circuit générateur d'impulsions (107), afin de former une amplitude restante du mouvement (Lr); et

un comparateur (109) pour comparer les valeurs d'une amplitude du mouvement (Ld) démarrant la décélération et ladite amplitude restante du mouvement (Lr) afin de fournir audit compteur un signal quand Ld=Lr et de faire décompter ledit compteur à partir de ladite valeur comptée.

8. Le dispositif selon la revendication 6 ou 7, dans lequel ledit circuit générateur d'impulsions (107) comprend:

un registre (107a) pour stocker ledit nombre des impulsions (ΔP);

un accumulateur (107b) pour délivrer des impulsions de débordement comme étant lesdites impulsions de sortie Po; et

un additionneur (107c) pour ajouter le contenu dudit registre (107a) et le contenu dudit accumulateur (107b) à chaque fois qu'une impulsion P est générée pendant une période constant Fo, et pour stocker la valeur ajoutée dans ledit accumulateur (107b).

# Fig. 1

Distributed Pulse Frequency

P1

P2

P3

Time t ——→

# Fig. 2

Distributed Pulse Frequency

P4

Time t ——→

# Fig. 3

Constant Speed

Acceleration Region | Region | Deceleration Region

fc

Distributed Pulse Frequency f

Q2

Q3

Q4

Q1

$\tau$

$\tau$

Time t ——→

# Fig. 4

Acceleration Region | Deceleration Region

$f_{max}$

Distributed Pulse Frequency f

$\tau$

$\tau$

Time t ——→

# Fig. 5

Q2

1

$g(t_1/256)$

g(t)

Q1

$\Delta t$

$t_1$

t

Time

Fig. 6

Frequency Characteristic Memory ~101

Read Control Circuit ~104

Pulse Generator ~102

Ps

Counter ~103

CUST

First Arithmetic Unit ~105

fc, L, τ

fmax

g(tl/256)

Second Arithmetic Unit ~106

ΔP

Δt

Pulse Generating Circuit ~107

Register ~107a

P

107c

Accumulator ~107b

Po

Ld

Remaining Movement Monitor ~108

Lr

Comparator ~109

CDS

0 089 156